# EUROPEAN PATENT APPLICATION

(11) **EP 1 484 670 A2**
(43) Date of publication of application: **08.12.2004**
(21) Application number: 03029957.2
(22) Date of filing: 29.12.2003
(51) Int. Cl.: G06F 3/12

(54) **Printer memory**

(30) Priority: 06.06.2003 US 456112
(71) Applicant: Hewlett-Packard Development Company, L.P., Houston, Texas 77070 (US)
(72) Inventor: Coca, Pedro R., Boise ID 83703 (US)
(74) Representative: Zimmermann, Tankred Klaus

(57) **Abstract**

Systems, methods, and devices for handling printing information are provided. A printing device 102 includes a processor 104, a print engine 110, and a universal serial bus (USB). The universal serial bus (USB) is operable to interface a USB compatible memory storage device 205 to the printing device 102 operable to enable an application on a host device 112-1 to recognize the memory storage device 205 on the printing device 102.

## Description

Printing devices, such as ink and laser printing devices, among others, operate according to control signals, commands, and/or computer readable instruction sets to effectuate print jobs that transfer ink and toner, among others, onto print media to form an image thereon. Images printed on print media can include, for example, text or one or more photographs or drawings, or a combination of text, photographs, and/or drawings.

Print jobs can be used to create many different types of printed items. For example, printing devices can be utilized to print photo lab quality photographs, brochures, draft documents, letterhead documents, envelopes, and business cards, among others. In some situations, it can be desirable to save a print job for printing at a later time. For example, when traveling to a meeting, a large amount of materials may be needed, e.g. when giving a presentation or working on a project, and a user may not want to print out hard copies of the materials until they arrive at their destination. In some situations, it can also be useful to save print jobs, for example, as a backup in case a print job does not print correctly.

Some printing devices allow for a memory storage device to be connected via an extended input/output interface (EIO), however, the EIO is often occupied by the printing device's connection to a network and cannot be connected to the memory storage device and the network simultaneously.

Further, in many devices, in order to utilize the memory storage device, the memory storage device often has to be accessed via a remote terminal. This involves powering up the terminal, with all of its various startup routines, in order to access data on the memory storage device.

Additionally, EIO connections are typically highly susceptible to damage by electro-static discharge (ESD). In this regard, the printing device should be turned off before the printing device can be connected to the memory storage device to reduce the risk of damage from ESD. This is an inconvenience to the user and to the equipment due to the powering up and down of the system.

Product designers are constantly challenged to make smaller devices with increased functionality. Doing so calls for more complex semiconductors, requiring submicron processes. In turn, these semiconductors become increasingly more sensitive to the effects of ESD. Portable systems are constantly exposed to ESD.

For example, an unsuspecting user can inject a hazardous charge during normal device operation, and then perceive the resulting system failure as poor product quality. Moreover, products shipped into Europe must meet strict ESD immunity standards or risk being banned. Increased device sensitivity coupled with increasingly miniaturized form factors have increased the challenge of designing adequate ESD protection.

### Brief Description of the Drawings

- Figure 1: illustrates a network embodiment.
- Figure 2: illustrates a system embodiment.
- Figure 3: illustrates a memory storage device embodiment.
- Figure 4: illustrates a printing device embodiment.
- Figure 5: illustrates a method embodiment.
- Figure 6: illustrates another method embodiment.
- Figure 7: illustrates another method embodiment.

### Detailed Description

Techniques for storing information in memory and systems and devices for performing the same are disclosed. Various embodiments of the present invention provide print information to be stored on a memory storage device. Embodiments of the present invention also allow a printing device to be configured to send printing information to be stored on a memory storage device and for a memory storage device to be operable to be identified as a memory storage device for use with a printing device. Embodiments of the present invention enable a printing device to activate one or more additional features when a memory storage device is identified. In various embodiments, the one or more additional features can be activated by a remote device, such as a remote terminal. In various embodiments, the activation of additional features can be accomplished by the printer driver either in a remote device or in a printing device.

A Universal Serial Bus (USB) is a high speed, low-cost serial bus that allows over 100 scanners, monitors, printers, joysticks, mice, and other peripherals to be connected to a USB compatible device. The flexibility of the USB scheme, allows peripheral devices to be connected to hubs or daisy-chained to other devices. In this way, multiple devices can be connected together without having to exchange the connection of one device with another.

Additionally, USB's generally allow for plug-and-play connection of all types of peripherals. In this regard, peripherals can be connected or disconnected while the computer is running. Further, many USB's provide ESD protection integrated into the bus or USB system, e.g. hardware, cabling, etc. Accordingly, the USB reduces the amount of rebooting and worrying, for example, about the type of connectors to use, the drivers to load, or the configuration to select.

Embodiments of the present invention include a USB having an electrostatic discharge damping structure. The USB can also be operable to provide hot-swapping of memory storage devices with other USB compatible devices. In various embodiments, the printing device can also be operable to utilize the memory storage device as a supplemental memory storage device. However, the invention is not so limited.

As one of ordinary skill in the art will appreciate upon reading this disclosure, various embodiments of the invention can be performed in one or more devices, device types, and system environments including networked environments. The discussion which follows illustrates, by way of example and not by way of limitation, various network and system environments and devices that implement or include embodiments of the present invention.

As one of ordinary skill the art will understand, the embodiments can be performed by software, application modules, and computer executable instructions operable on the systems and devices shown herein or otherwise. The invention, however, is not limited to any particular operating environment or to software written in a particular programming language. Software, application modules and/or computer executable instructions, suitable for carrying out embodiments of the present invention, can be resident in one or more devices or locations or in several and even many locations.
Unless explicitly stated, the method embodiments described herein are not constrained to a particular order or sequence. Additionally, some of the described method embodiments can occur or be performed at the same point in time.

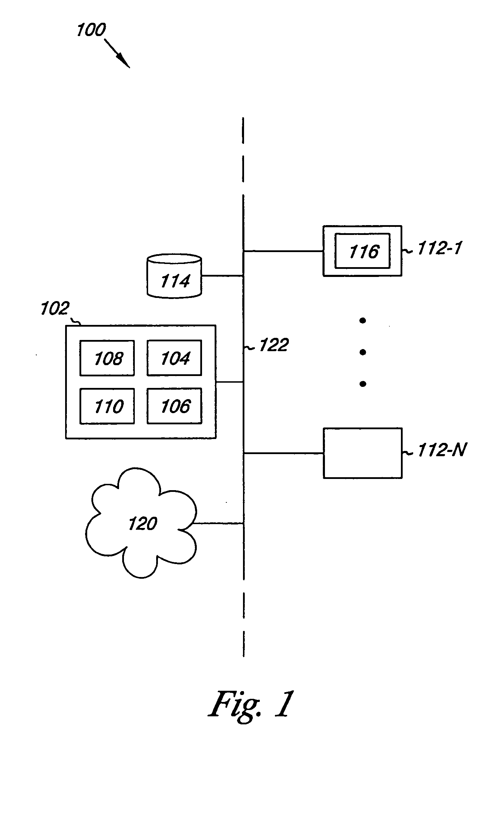

Figure 1 illustrates a network environment 100 according to various embodiments of the present invention. As shown in Figure 1, the network 100 includes a printing device 102. In various embodiments, including the embodiment shown in Figure 1, the printing device 102 can include one or more processors and/or application modules 104, one or more memory devices 106, and a print engine 110. The one or more processors and/or application modules 104 are operable on computer readable instructions for processing information and data as the same will be known and understood by one of ordinary skill in the art. In various embodiments of the invention, the one or more processors and/or application modules 104 are operable on computer readable instructions for interpreting received image data. For example, an application module 104 can include a set of instructions utilized by the printing device 102 to accomplish a specific task within the printing device 102.

As shown in the embodiment of Figure 1, the printing device 102 can include a printing device driver 108 and a print engine 110. In various embodiments of Figure 1, additional printing device drivers 116 can be located off the printing device 102 such as, for example on a remote device, e.g. remote device 112-1 in Figure 1. Remote devices can be devices such as remote terminals, e.g. desktop or laptop computers and handheld devices such as wireless phones and personal digital assistants (PDAs). Such additional printing device drivers can be an alternative to the printing device driver 108 located on the printing device 102 or provided in addition to the printing device driver 108.

As one of ordinary skill in the art will understand, a printing device driver 116 is operable to create a computer readable instruction set for a print job utilized for rendering images by the print engine 110. Printing device driver 116 includes any printing device driver suitable for carrying out various aspects of embodiments of the present invention. That is, the printing device driver can take data from one or more software applications and transform the data into a print job.

When a printing device is to be utilized to print an image on a piece of print media, generally, a print job is created that provides instructions on how to print the image. These instructions are communicated in a Page Description Language (PDL) to initiate a print job. PDL's are high level languages for instructing the printing engine of the printing device to print text and graphics on a page. Two major languages currently in use are Adobe's Postscript and Hewlett Packard's PCL (print control language). The PDL can include a list of printing properties for the print job. Printing properties include, by way of example and not by way of limitation, the size of the image to be printed, its positioning on the print media, resolution of a print image (e.g. Dots Per Square Inch (DPI)), color settings, simplex or duplex setting, indications to process image enhancing algorithms (e.g. halftoning), and the like.

A print job involves utilizing a printer driver to create an instruction set which is sent to a printing engine for rendering an image. A Page Description Language (PDL) is one form of an instruction set associated with a print job. In some devices and systems, a printer driver can be located remotely on a remote device which is interfaced to a printing device containing a printing engine.

Some recently developed file formats include bitmaps of the documents they represent and therefore can be sent directly to a print engine without utilizing a printer driver to create a print job. These types of files can be saved directly to a memory storage device for printing at a later time. Examples of such file formats include, but are not limited to, portable document format (PDF), joint photographic experts group (JPEG), graphics interchange format (GIF), and the like.

As one of ordinary skill in the art will appreciate upon reading this disclosure, the printing device 102 includes a printing device operable to print images. In the various embodiments, the printing device 102 can include a single-function printing device, such as the line of DeskJet printing devices, or photo printing device, such as the line of Photosmart printing devices, sold by the Hewlett Packard Company. In the various embodiments, the printing device 102 can include multiple functions. For example, Hewlett Packard produces several devices that provide printing, copying, and/or scanning. Additionally, some multi-function devices also include faxing capabilities. These types of devices are generally referred to as PCS (Printing/Copying/Scanning) devices or as All-in-One (AiO) devices.

As shown in the embodiment of Figure 1, printing device 102 can be networked to one or more host devices 112-1, ..., 112-N over a number of data links, shown as 122. As one of ordinary skill in the art will appreciate upon reading this disclosure, the number of data links 122 can include one or more physical connections, one or more wireless connections, and any combination thereof, as part of a network. That is, the printing device 102 and the one or more host devices 112-1, ..., 112-N can be directly connected and/or can be connected as part of a wider network having a plurality of data links 122.

It is noted that any number of host devices and host device types 112-1, ..., 112-N can be networked to the printing device 102. The invention is not so limited. That is, in various embodiments, the one or more host devices 112-1, ..., 112-N can include a number of different types of host devices.

In various embodiments, the one or more host devices 112-1, ..., 112-N can include remote devices such as one or more desktop computers, laptop computers, workstations, or hand held devices, among other remote device types. In some instances, one or more remote devices 112-1, ..., 112-N can include one or more peripheral devices distributed within the network. Examples of peripheral devices include, but are not limited to, scanning devices, fax capable devices, copying devices, and the like.

The host device can include one or more application programs. Application programs operate on a device to provide a specific function. For example, applications include but are not limited to programs for word processing, generating spreadsheets, graphics, pictures, e-mail, and operating systems, among others. In various embodiments, an application on a host device is operable to recognize the memory storage device on the printing device. The printing device, USB, host device, and/ or memory storage device can have software, firmware, and/or controllers/processors thereon for enabling the connection and recognition of the memory storage device by the application. In this way, the application can identify and access the memory storage device connected to the printing device.

As noted above, in various embodiments, a printing device 102 can include a multi-function device having several functionalities such as printing, copying, and scanning included. As will be known and understood by one of ordinary skill in the art, such remote devices 112-1, ..., 112-N can also include one or more processors and/or application modules suitable for running software and can include one or more memory devices thereon.

As shown in the embodiment of Figure 1, a network 100 can include one or more networked storage devices 114, e.g. remote storage database and the like. Likewise, the network 100 can include one or more Internet connections 120.

As one of ordinary skill in the art will appreciate upon reading this disclosure, the network described herein can include any number of network types including, but not limited to, a Local Area Network (LAN), a Wide Area Network (WAN), a Personal Area Network (PAN), and the like. And, as stated above, data links 122 within such networks can include any combination of direct or indirect wired and/or wireless connections, including but not limited to electrical, optical, and RF connections.

As one of ordinary skill in the art will appreciate upon reading this disclosure, memory, such as memory 106 and memory 114, can be distributed anywhere throughout a networked system. Memory, as the same is used herein, can include any suitable memory for implementing the various embodiments of the invention. Thus, memory and memory devices include fixed memory and portable memory. Examples of memory types include Non-Volatile (NV) memory (e.g. Flash memory), RAM, ROM, magnetic media, and optically read media and includes such physical formats as memory cards, memory sticks, memory keys, CDs, DVDs, hard disks, and floppy disks, to name a few.

The invention, however, is not limited to any particular type of memory medium and is not limited to where within a device or networked system a set of computer instructions reside for use in implementing the various embodiments of invention. One of ordinary skill in the art will appreciate the manner in which software, e.g. computer readable instructions, can be stored on a memory medium.

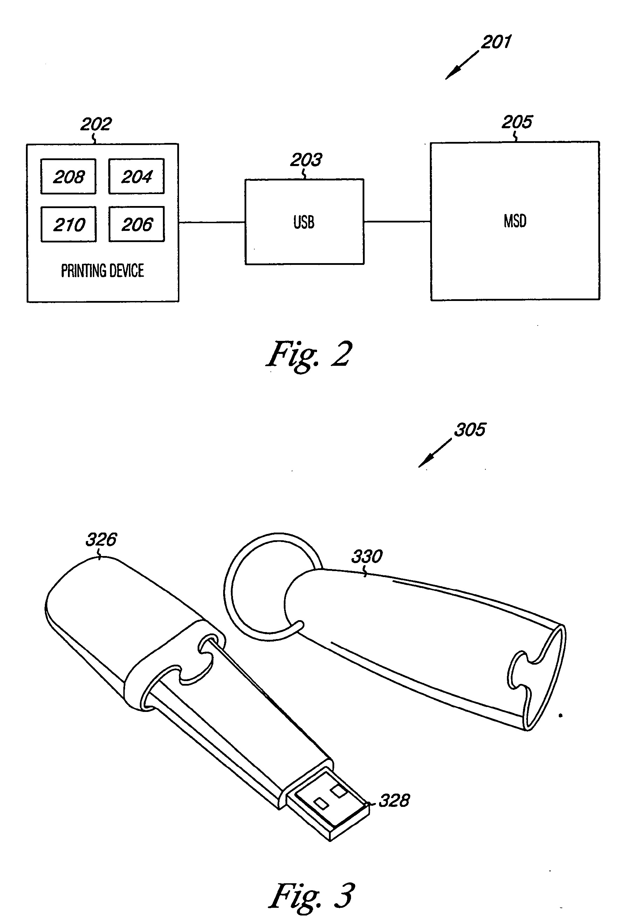

Figure 2 illustrates a system environment 201 according to various embodiments of the present invention. In various embodiments, including the embodiment shown in Figure 2, a printing device 202 can include one or more processors and/or application modules 204 and one or more memory devices 206. The one or more processors and/or application modules 204 are operable on computer readable instructions for processing information and data as the same will be known and understood by one of ordinary skill in the art. In various embodiments of the invention, the one or more processors and/or application modules 204 are operable on computer readable instructions for interpreting received image data. As shown in the embodiment of Figure 2, in various embodiments the printing device 202 can include a printing device driver 208 and a print engine 210.

In the embodiment of Figure 2, the system 201 also includes a universal serial bus (USB) 203 that can reside on the printing device 202, or as illustrated in Figure 2, can reside outside the printing device 202. The invention is not so limited. In various embodiments, the system 201 can include a USB 203 that includes an electrostatic discharge damping structure. In this way, damage due to electro-static discharge can be reduced.

The system illustrated in Figure 2, utilizes the USB 203 to interface the printing device 202 with a memory storage device (MSD) 205. A memory storage device allows information, such as print jobs, to be stored thereon for future use. This information can provide many uses. For example, the information can provide a portable set of printing information, e.g. print jobs, that can be moved from one device to another for printing without storing the original data of the document to be printed. This can be useful when a computer with software compatible with the document to be printed is not accessible, but where a printing device is. For example, since the print job has been rendered with a printer driver in a specific PDL, the printing device can print the print job without accessing the program on which a document has been created. The printing device 202 also can be operable to utilize the memory storage device 205 as a supplemental memory storage device. In this way, the device can be utilized to store printing information to be used at a later time and/or at a later location.

The memory storage device 205 can be any USB compatible device allowing for memory storage. Thus, memory and memory devices include fixed memory and portable memory. Examples of memory types include flash, RAM, and ROM such as memory cards, memory sticks, memory keys, CDs, DVDs, floppy disks, and hard drives, to name a few.

The USB 203 can also be operable to provide hot-swapping of memory storage devices 205 with other USB compatible devices. However, the invention is not so limited. Since the USB 203 can allow connectivity for many devices simultaneously, other memory storage devices 205, peripheral devices, and remote devices can be attached to the USB 203 without having to replace one device for another. If it is necessary to add or remove a device from the USB 203, the connection can be added or removed without having to power down the host device, e.g. printing device 202.

Figure 3 illustrates a memory storage device according to an embodiment of the present invention. The memory storage device 305 includes a storage medium 326 stored within a protective outer housing. These types of memory storage devices 305 are typically solid state storage devices. That is, that the device has no moving parts and thus the memory storage medium 326 within the device 305 is in a solid state. In this embodiment of the device 305, the storage medium 326 uses electrical impulses to electrically load/unload gates created by a number of transistors separated by an insulating layer formed in the medium 326.

In the embodiment shown in Figure 3, the memory storage device 305 has a USB compatible connector 328 that enables the memory storage medium 326 to be accessed for storage and/or retrieval of information by another device such as a computer or peripheral. For example, in various embodiments, the memory storage device 305 can be interfaced with one or more host devices such as a desktop computer or a peripheral device such as one or more printing devices and a variety of printing information can be stored thereon.

For example, a number of print jobs can be stored thereon either in addition to or instead of the jobs being printed. The memory storage device 305 can then be interfaced to allow for access to the currently stored information and accessible for storing additional printing information, or can be removed. The user can then interface the memory storage device 305 with a host or peripheral device at a later time and/or location and the printing information can be accessed and can be printed.

In the embodiment shown in Figure 3, the memory storage device 305 is a memory key that can be utilized as a portable memory storage device. The memory storage device 305 shown is compact and therefore suited for portability. In this embodiment, the memory storage device 305 also has a cover 330 to cover the USB compatible connector 328 to protect it when the connector 328 is not interfaced with a USB.

Memory storage devices, such as that shown in Figure 3 are manufactured, for example, by Hewlett Packard. Memory storage devices have a number of possible memory storage applications. For example, the memory storage device 305 can be utilized as a memory storage device for storing printing information, such as print jobs and the like.

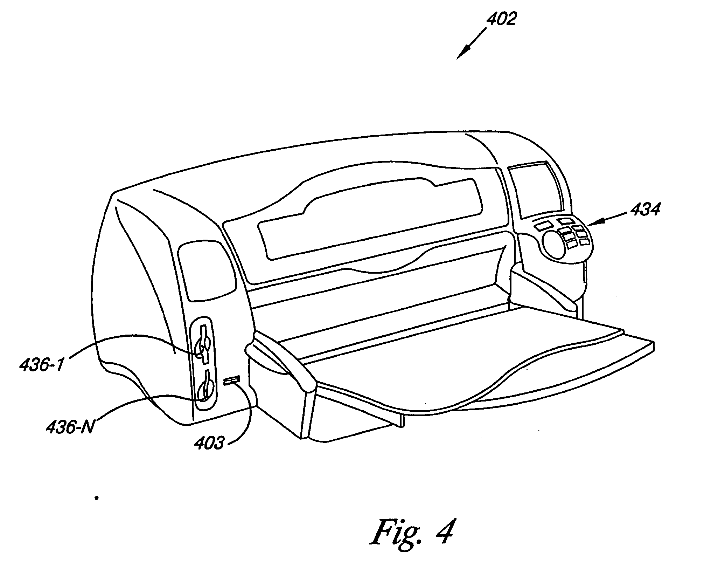

Figure 4 illustrates a printing device according to an embodiment of the present invention. In this embodiment, the printing device 402 illustrated is an inkjet printing device. The printing device 402 has a number of slots for memory cards and other memory media 436-1 to 436-N. The media slots 436-1 to 436-N are typically provided for use with memory media used, for example, in a digital camera for storage of documents, such as photographic images. The media can be inserted into slots 436-1 to 436-N to allow the stored data to be downloaded for printing.

The embodiment of Figure 4 also includes a universal serial bus (USB) 403 that can be utilized for a number of different purposes. In various embodiments, the USB 403 can identify a memory storage device, such as the device 305 shown in Figure 3. In various embodiments, the USB 403 can be utilized to communicate printing information to a memory storage device to store and/or transfer printing information. In various embodiments, the USB 403 can be configured to send and receive printing information with a memory storage device to which the USB 403 is interfaced. In various embodiments, a USB interface can be internal to the printing device 402 and is connected to adapt a compatible memory storage device such as a USB compatible hard drive within the printing device 402, or a USB compatible slot for receiving a memory storage device.

Additionally, in various embodiments, a user can direct which files are to be stored, deleted, and/or printed from a memory storage device via the console 434 on the printing device 402, or from a remote terminal.

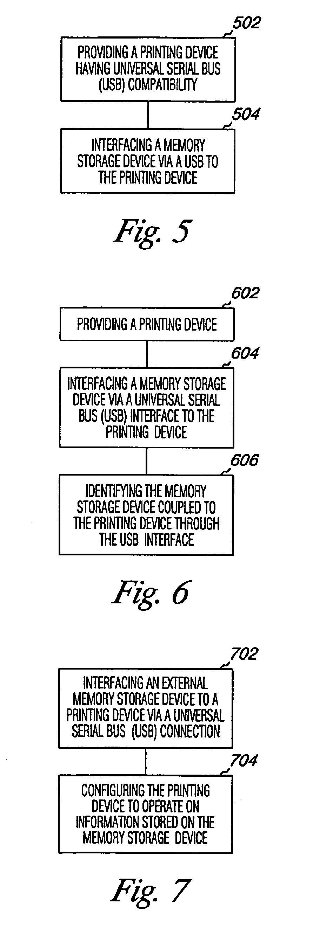

Figure 5 is a block diagram illustrating a method according to an embodiment of the present invention. In the embodiment of Figure 5, a method for accessing printing information is provided. As illustrated in the embodiment of Figure 5, the method includes providing a printing device having universal serial bus (USB) compatibility at block 502. The method embodiment of Figure 5 also includes, interfacing a memory storage device via a USB to the printing device at block 504.

In various embodiments, the method can also include accessing a memory storage device through a USB connection to receive information stored thereon. The method can also include receiving identification information from the memory storage device.

In various embodiments, the method can also include configuring the printing device to activate one or more additional features when a memory storage device identification is received. In some embodiments, configuring the printing device to activate one or more additional features includes accessing stored jobs for printing. In some embodiments, configuring the printing device to activate one or more additional features includes saving jobs for printing.

In various embodiments, the method can also include providing firmware to recognize the memory storage device. The method can also include providing hardware operable to connect the USB to a formatter board.

Figure 6 is a block diagram illustrating a method according to an embodiment of the present invention. In the embodiment of Figure 6, a method for accessing printing information is provided. As illustrated in the embodiment of Figure 6, the method includes providing a printing device at block 602. The method embodiment of Figure 6 also includes, interfacing a memory storage device via a universal serial bus (USB) interface to the printing device at block 604. The method embodiment of Figure 6 also includes identifying the memory storage device coupled to the printing device through the USB interface at block 606.

In various embodiments, the method can also include configuring the printing device to send information to a memory storage device for storage In some embodiments, configuring the printing device includes providing an instruction set instructing the printing device how to provide information to the memory storage device for storage. In some embodiments, configuring the printing device includes providing an instruction set instructing how the printing device is to receive information stored on the memory storage device. In some embodiments, configuring the printing device includes providing an instruction set instructing how the printing device is to store printing information on the memory storage device that is received from a remote device.

Figure 7 is a block diagram illustrating a method according to an embodiment of the present invention. As illustrated in the embodiment of Figure 7, the method includes interfacing a memory storage device to a printing device via a universal serial bus (USB) connection at block 702. In some embodiments, interfacing a memory storage device can also include interfacing the memory storage device to store print jobs.

The method embodiment of Figure 7 also includes configuring the printing device to operate on information stored on the memory storage device at block 704. In some embodiments, configuring the printing device to operate on information stored on the memory storage device can also include configuring the printing device to execute a print job.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the invention. It is to be understood that the above description has been made in an illustrative fashion, and not a restrictive one. Combination of the above embodiments, and other embodiments not specifically described herein will be apparent to those of skill in the art upon reviewing the above description. The scope of the various embodiments of the invention includes any other applications in which the above structures and methods are used. Therefore, the scope of various embodiments of the invention should be determined with reference to the appended claims, along with the full range of equivalents to which such claims are entitled.

It is emphasized that the Abstract is provided to comply with 37 C.F.R. § 1.72(b) requiring an Abstract that will allow the reader to quickly ascertain the nature of the technical disclosure. It is submitted with the understanding that it will not be used to limit the scope of the claims.

In the foregoing Detailed Description, various features are grouped together in a single embodiment for the purpose of streamlining the disclosure. This method of disclosure is not to be interpreted as reflecting an intention that the embodiments of the invention require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A printing system 100, comprising:
a host device 112-1 including an application thereon;
a universal serial bus (USB) compatible memory storage device 205 having information stored thereon; and
a printing device 102 in communication with the host device 112-1, wherein the printing device 102 includes;
a processor 104;
a print engine 110 operably coupled to the processor 104; and
means for interfacing the USB compatible memory storage device 205 with the host device 112-1 to access information stored thereon; and
wherein the application is operable to recognize the memory storage device 205 on the printing device 102.

2. The printing system 100 of claim 1, wherein the printing device 102 includes a printing device 102 operable to activate one or more additional features utilizing information stored on the memory storage device 205.

3. The printing system 100 of claim 2, wherein the host device 102 includes a host device 112-1 operable to activate the one or more additional features.

4. The printing system 100 of claim 1, wherein the means for interfacing includes a USB.

5. The printing system 100 of claim 4, wherein the USB includes an electrostatic discharge damping structure.

6. The printing system 100 of claim 1, wherein the memory storage device 205 includes a memory storage device 205 used as a supplemental memory storage device by the printing device 102.

7. The printing system 100 of claim 1, wherein the printing device 102 includes hardware operable to connect the USB to an application module on the printing device 102.

8. The printing system 100 of claim 7, wherein the application module includes an application module operable to receive printing information from the memory storage device 205.

9. The printing system 100 of claim 1, wherein the means for interfacing includes a USB operable to provide hot-swapping of memory storage devices 205 with other USB compatible devices.
